# EUROPÄISCHE PATENTSCHRIFT

(11) **EP 3 731 496 B1**
(45) Veröffentlichungstag und Bekanntmachung des Hinweises auf die Patenterteilung: **28.08.2024**
(21) Anmeldenummer: 20161815.4
(22) Anmeldetag: 09.03.2020
(51) Int. Cl.: H04L 67/12, H04L 12/403, H04L 41/122, H04L 47/28

(54) **PROZESSEINRICHTUNG, NETZWERK, VERFAHREN UND COMPUTERPROGRAMM**
PROCESS DEVICE, NETWORK, METHOD AND COMPUTER PROGRAM
DISPOSITIF DE TRAITEMENT, RÉSEAU, PROCÉDÉ ET PROGRAMME INFORMATIQUE

(30) Priorität: 23.04.2019 DE 102019205776
(43) Veröffentlichungstag der Anmeldung: 28.10.2020
(73) Patentinhaber: Robert Bosch GmbH, 70442 Stuttgart (DE)
(72) Erfinder: Dose, Sven, 01109 Dresden (DE); Prinz, Frederick, 71272 Renningen (DE); Schoeffler, Michael, 75365 Calw-Altburg (DE)

(56) Entgegenhaltungen:
- EP-A1- 3 035 606
- US-B2- 10 122 589
- ANONYMOUS: "Time-Sensitive Networking: A Technical Introduction White Paper Time-Sensitive Networking: A Technical Introduction", 1 May 2017 (2017-05-01), XP055723610, Retrieved from the Internet <URL:https://www.cisco.com/c/dam/en/us/solutions/collateral/industry-solutions/white-paper-c11-738950.pdf> [retrieved on 20200819]

## Beschreibung

### Stand der Technik

Es wird eine Prozesseinrichtung zur Durchführung eines Teilschritts in einer Fertigungsanlage vorgeschlagen, wobei die Prozesseinrichtung ein Netzwerkmodul zum Aufbau einer Netzwerkverbindung und ein Speichermodul aufweist.

Fertigungsanlagen umfassen häufig eine Mehrzahl an Prozesseinrichtungen, wobei die Prozesseinrichtungen Teilschritte einer Fertigung ausführen. Prozesseinrichtungen sind beispielsweise Module wie Transporteinrichtungen, Förderbänder, Bohrstationen oder mechanische Arbeitsstationen. Fertigungsanlagen müssen im Zuge häufig wechselnder Produkte und immer schneller werdender Produktzyklen wandlungsfähig aufgebaut sein. Hierzu müssen beispielsweise Prozesseinrichtungen die Fertigungsschritte in unterschiedlicher Reihenfolge und/oder anderweitig durchführen.

Die Druckschrift DE 10 2005 061 155 A1 beschreibt eine Kommunikationsstruktur mit einer Kommunikationssteuerung, die eine Synchronisationseinheit und eine erste Schnittstelle und eine zweite Schnittstelle aufweist, wobei zum Datenaustausch die erste Schnittstelle mittels einer ersten Verbindung und die zweite Schnittstelle mit einer zweiten Verbindung mit einem Kommunikationssystem, welches mindestens einen weiteren Teilnehmer aufweist, verbunden ist, wobei die erste Schnittstelle und die zweite Schnittstelle der Kommunikationssteuerung eine variable Funktionalität aufweisen.

In der Veröffentlichung "Time-Sensitive Networking: A Technical Introduction White Paper Time-Sensitive Networking: A Technical Introduction" ((20170501), URL: https://www.cisco.com/c/dam/en/us/solutions/collateral/industry-solutions/white-paper-c11-738950.pdf (abgerufen 19.04.2021)) wird eine Kurzeinführung in das Gebiet des Time-Sensitive-Networkings gegeben, wobei dessen Komponenten und Interaktionen im Rahmen eines physikalischen bzw. realen Netzwerks beschrieben werden.

### Offenbarung der Erfindung

Es wird eine Prozesseinrichtung zur Durchführung eines Teilschritts in einer Fertigungsanlage mit den Merkmalen des Anspruchs 1 vorgeschlagen. Ferner wird ein Netzwerk mit einem Netzwerkswitch, ein Verfahren zum Betreiben eines Netzwerks, ein Computerprogramm und ein Speichermedium vorgeschlagen. Bevorzugte und/oder vorteilhafte Ausführungsformen der Erfindung ergeben sich aus den Unteransprüchen, der Beschreibung und den beigefügten Figuren.

Es wird eine Prozesseinrichtung zur Durchführung eines Teilschritts in einer Fertigungsanlage vorgeschlagen. Die Fertigungsanlage umfasst insbesondere eine Mehrzahl an Prozesseinrichtungen. Die Prozesseinrichtung ist beispielsweise zur Durchführung eines mechanischen Schrittes, eines Bearbeitungsschrittes, eines Messschrittes und/oder eines elektrischen Schrittes an einem Objekt oder Bauteil ausgebildet. Beispielsweise bildet die Prozesseinrichtung eine Transporteinrichtung, ein Förderband, eine Bohrstation, eine Arbeitsstation, insbesondere eine mechanische Arbeitsstation, oder eine Messstation. Die Fertigungsanlage kann in einem Fertigungsraum, beispielsweise Fabrik oder Fabrikabschnitt, angeordnet sein, wobei die Prozesseinrichtungen in diesem Raum anordenbar sind. Insbesondere sind die Prozesseinrichtungen miteinander in Interaktion und/oder interagierbar. In der Fertigungsanlage kann ein Teil, insbesondere Bauteil, herstellbar sein oder bearbeitbar sein. Die Fertigungsanlage ist wandlungsfähig aufgebaut, um wechselnder Produkte fertigen zu können. Hierzu ist die Fertigungsanlage ausgebildet, dass die Prozesseinrichtungen die Fertigungsschritte in unterschiedlicher Reihenfolge und/oder anderweitig durchführen. Ferner ist die Fertigungsanlage ausgebildet, dass die Prozesseinrichtungen physikalisch anders angeordnet werden können, wobei die Anordnung der Prozesseinrichtungen zu Netzwerken und/oder Netzwerktopologien zusammengefasst werden.

Die Prozesseinrichtung weist ein Netzwerkmodul zum Aufbau einer Time-Sensitive-Networking-Verbindung (zeitsensiblen Netzwerkverbindung) auf. Das Netzwerkmodul kann als ein Hardware- oder Softwaremodul ausgebildet sein. Beispielsweise umfasst die Prozesseinrichtung Netzwerkschnittstellen zum Verbinden mit einer weiteren Prozesseinrichtung und/oder einem Netzwerkswitch. Die Verbindung kann als eine kabelgebundene Verbindung ausgebildet sein. Insbesondere ist die Time-Sensitive-Networking-Verbindung als eine Realtime-Verbindung ausgebildet, sodass die Prozesseinrichtungen mit einer geringen Latenzzeit betreibbar sind und insbesondere Fertigungsschritte mit großer zeitlicher Genauigkeit ausführbar sind. Time-Sensitive-Networking wird insbesondere kurz auch als TSN bezeichnet. Mittels der TSN-Verbindung ist eine Echtzeitfähigkeit der Prozesseinrichtung und/oder der TSN-Verbindung realisierbar. Beispielsweise basiert die TSN-Verbindung auf einem erweiterten Standard der Ethernet-Netzwerke. Insbesondere umfassen die Standards und/oder die TSN-Verbindung eine Zeitsynchronisation, ein Scheduling und/oder ein Traffic Shaping. Ferner ist beispielsweise von dem TSN-Standard und/oder der TSN-Verbindung ein Mechanismus zur Pfadsuche und/oder Reservierung von Leistungskapazitäten zur Vermeidung von Paketverlusten umfasst. Die Time-Sensitive-Networking-Verbindung kann zwischen der Prozesseinrichtung und/oder mindestens einer weiteren oder mehreren Prozesseinrichtungen bestehen und/oder aufgebaut werden. Alternativ und/oder ergänzend kann die Time-Sensitive-Networking-Verbindung zwischen der Prozesseinrichtung und einem Netzwerkswitch ausgebildet sein.

Die Prozesseinrichtung umfasst ein Speichermodul. Das Speichermodul ist beispielsweise als ein Speicherchip ausgebildet. Insbesondere kann das Speichermodul Teil eines Rechnermoduls und/oder Prozessormoduls sein. Das Speichermodul umfasst Verwaltungsschalendaten, insbesondere sind in dem Speichermodul Verwaltungsschalendaten gespeichert. Als Verwaltungsschale wird beispielsweise eine digitale Repräsentation der Prozesseinrichtung verstanden. Beispielsweise ist die Verwaltungsschale ausgebildet, die technischen Funktionalitäten der Prozesseinrichtung zu beschreiben und/oder umfasst ein Modell der Prozesseinrichtung. Als Verwaltungsschalendaten werden insbesondere die Daten verstanden, die zur Beschreibung der Prozesseinrichtung und/oder Funktionalität der Prozesseinrichtung dienen und/oder benötigt werden. Ferner können die Verwaltungsschalendaten Daten zum Betreiben und/oder Ansteuern der Prozesseinrichtung umfassen.

Die Verwaltungsschalendaten umfassen Virtual-Topology-Daten (Daten einer virtuellen Topologie). Die Virtual-Topology-Daten sind zum Aufbau, Betreiben, Definieren und/oder Ändern eines Software-Defined-Networkings (softwaredefinierten Netzwerkes oder softwaredefinierte Vernetzung). Insbesondere ist die Time-Sensitive-Networking-Verbindung zur Realisierung des Software-Defined-Networkings ausgebildet. Als Software-Defined-Networking wird beispielsweise der Aufbau eines Netzwerks insbesondere umfassend mehrere Prozesseinrichtungen verstanden, die softwarebasiert und basierend auf einem physikalischen Netzwerk ein virtuelles Netzwerk bildet und/oder abstrahiert. Das Software-Defined-Networking dient der Definition und/oder dem Aufbau einer virtuellen Topologie. Als virtuelle Topologie wird ein Netzwerk und/oder die Topologie des Netzwerks verstanden, welches nicht zwangsläufig dem Aufbau und/oder der Topologie der physikalischen Verbindungen entspricht. Beispielsweise kann ein Netzwerk eine erste Topologie, beispielsweise Ring oder Stern aufweisen, wobei die erste Topologie die reale Verkabelung der Komponenten ist, wobei mittels dem Software-Defined-Networking eine anderweitige Topologie betreibbar und/oder realisierbar ist als die erste. Die Virtual-Topology-Daten umfassen insbesondere die Daten, die zum Aufbau, Betreiben der Software-Defined-Networking nötig sind.

Der Erfindung liegt die Überlegung zugrunde, eine Prozesseinrichtung für eine Fertigungsanlage bereitzustellen, die realtime-fähig (echtzeitfähig) ist und insbesondere Time-Sensitive-Networking unterstützt. Damit kann zur Realisierung von virtuellen Topologien innerhalb eines Software-Defined-Networkings dienen. Damit kann beispielsweise eine wandlungsfähige Fertigungsanlage erzielt werden, da keine unnötige physikalische Verkabelung und/oder Realisierung des real darunterliegenden physikalischen Netzwerkes nötig ist, da mittels des Software-Defined-Networkings unterschiedliche Topologien innerhalb der Fertigungsanlage möglich sind. Insbesondere ist durch die Time-Sensitive-Networking-Verbindung innerhalb der virtuellen Topologie eine realtime-fähige Fertigungsanlage erzielbar, sodass auch zeitlich genau zu erfolgende Teilschritte und/oder Positionierungen mit hohen Geschwindigkeiten realisierbar sind. Insbesondere kann so eine virtuelle Topologie mit einer sehr geringen Latenzzeit erzielt werden. Vorzugsweise ist die Prozesseinrichtung dazu ausgebildet, ein Software-Defined-Networking mittels der Virtual-Topology-Daten auszuführen und/oder bereitzustellen.

Erfindungsgemäß ist es vorgesehen, dass die Virtual-Topology-Daten einen Aktivitätsparameter umfassen. Der Aktivitätsparameter ist zur Beschreibung der Aktivität und/oder des Prozessstatusses der Prozesseinrichtung ausgebildet. Beispielsweise kann dieser Parameter signalisieren und/oder einstellen, ob die Prozesseinrichtung aktiv oder deaktiviert ist. Durch Veränderung dieses Parameters kann beispielsweise die Prozesseinrichtung von aktiv auf inaktiv und/oder umgekehrt gesetzt werden. Ferner können die Virtual-Topology-Daten einen ID-Parameter umfassen. Der ID-Parameter ist beispielsweise als Komponenten-ID ausgebildet. Beispielsweise beschreibt der ID-Parameter die Adresse und/oder die ID der Prozesseinrichtung zum Ermöglichen einer eindeutigen Identifikation der Komponente in einem Netzwerk. Beispielsweise ist der ID-Parameter ein Hostname, eine Mac- oder IP-Adresse. Insbesondere umfassen die Virtual-Topology-Daten einen Typparameter der virtuellen Topologie. Beispielsweise beschreibt der Typparameter die virtuelle Topologie, an der die Prozesseinrichtung teilnimmt. Der virtuelle Topologieparameter kann beispielsweise definieren und/oder beschreiben, ob die virtuelle Topologie einen Ring, einen Stern oder eine Linie bildet. Im Speziellen umfassen die Virtual-Topology-Daten einen Topologie-ID-Parameter. Der Topologie-ID-Parameter ist beispielsweise ausgebildet, die jeweilige virtuelle Topologie eindeutig identifizierbar zu machen, beispielsweise falls Prozesseinrichtungen und/oder ein Netzwerk mehrere virtuelle Topologien umfasst. Die Prozesseinrichtung kann ausgebildet sein, beispielsweise nur an einer einzigen virtuellen Topologie teilzunehmen, alternativ kann die Prozesseinrichtung ausgebildet sein, an mehreren virtuellen Topologien teilzunehmen. Vorzugsweise umfassen die Virtual-Topology-Daten einen Indexparameter, wobei der Indexparameter beispielsweise die Position innerhalb der virtuellen Topologie beschreibt. Insbesondere kann der Indexparameter als eine positive ganze Zahl ausgebildet sein. Der Indexparameter kann im Speziellen zur Beschreibung und/oder Charakterisierung von Master und/oder Slave ausgebildet sein, beispielsweise kann der Indexparameter null zur Beschreibung eines Masters im Netzwerk dienen. Beispielsweise kann der Indexparameter gleich null zur Beschreibung eines Masters im Netzwerk dienen. Im Speziellen kann der Indexparameter zur Beschreibung der Reihenfolge der Teilnahme der Prozesseinrichtungen innerhalb der virtuellen Topologie dienen, wobei beispielsweise eine aufsteigende Indexparameternummerierung das Durchlaufen der Prozesseinrichtungen entlang eines Signalweges beschreibt. Die Virtual-Topology-Daten können insbesondere einen Nachfolgeparameter umfassen. Der Nachfolgeparameter ist beispielsweise zur Charakterisierung des im Netzwerk und/oder der virtuellen Topologie nachfolgenden Teilnehmers, insbesondere Prozesseinrichtung, wobei der Nachfolgeparameter beispielsweise den Indexparameter der nächstfolgenden Prozesseinrichtung beschreibt. Im Speziellen können die Virtual-Topology-Daten einen Nachfolge-Interface-Parameter aufweisen. Der Nachfolge-Interface-Parameter beschreibt beispielsweise, welches Interface, dem ausgehende Interface der Prozesseinrichtung folgt, beispielsweise kann das nachfolgende Interface von dem vorhergegangenen Interface unterschiedlich sein. Dieser Ausgestaltung liegt die Überlegung zugrunde, einen Datensatz für Prozesseinrichtungen bereitzustellen, welche eine Generierung einer virtuellen Topologie ermöglicht, wobei insbesondere die zu nutzenden und/oder benötigten Virtual-Topology-Daten herstellerunabhängig ausgebildet sind.

Insbesondere ist es vorgesehen, dass die Virtual-Topology-Daten anpassbar und/oder veränderbar ausgebildet sind und/oder anpassbare und/oder veränderbare Daten umfassen. Beispielsweise können die Virtual-Topology-Daten von einem Mastermodul, beispielsweise einer Prozesseinrichtung und/oder eines Netzwerkswitches, abrufbar und/oder anpassbar sein. Beispielsweise werden zur Etablierung und/oder zum Aufbau beziehungsweise zum Betrieb einer Virtual-Topology eine Teilmenge der Virtual-Topology-Daten angepasst und/oder verändert, beispielsweise die Indexparameter, der Nachfolgeparameter und/oder der Aktivitätsparameter. Insbesondere kann ein Teil der Virtual-Topology-Daten unveränderbar und/oder statisch ausgebildet sein, beispielsweise der ID-Parameter und/oder ein Parameter, der die Funktionalität beschreibt. Vorzugsweise sind die Virtual-Topology-Daten abrufbar, beispielsweise von einer anderen und/oder weiteren Prozesseinrichtung und/oder einem Netzwerkswitch.

Besonders bevorzugt ist es, dass das Netzwerkmodul zur Kopplung mit einer weiteren dergleichen Prozesseinrichtung ausgebildet ist. Im Speziellen ist das Netzwerkmodul ausgebildet zur Kopplung mit einer Vielzahl, insbesondere mehr als fünf oder mehr als zehn Prozesseinrichtungen. Insbesondere kann das Netzwerkmodul auch zur Kopplung mit einem Netzwerkswitch und/oder mit einer Mehrzahl an Netzwerkswitches ausgebildet sein. Die Kopplung ist als eine Time-Sensitive-Networking-Verbindung ausgebildet. Insbesondere ist die Kopplung als eine Realtime-Networking-Verbindung ausgebildet. Mittels der Time-Sensitive-Networking-Verbindung kann ein Datenaustausch zwischen den verbundenen Prozesseinrichtungen und/oder verbundenen Teilnehmern erfolgen. Das Netzwerkmodul ist dabei insbesondere ausgebildet, eine Zeitsynchronisation durchzuführen, ein Traffic-Scheduling und/oder eine Fehlertoleranz anzuwenden.

Als Zeitsynchronisation wird beispielsweise verstanden, alle gemeinsamen und/oder teilnehmenden Geräte, hier beispielsweise teilnehmenden Prozesseinrichtungen und/oder Netzwerkswitches auf ein gemeinsames Verständnis der Zeit einzustellen. Dies ist beispielsweise dazu eingeführt, um ein TSN-Netzwerk mit einer getakteten Ende-zu-Ende-Übertragung von Daten mit harten Echtzeitanforderungen funktionsfähig zu machen. Dazu wird jedem Teilnehmer im TSN-Netzwerk eine eigene, interne Uhr zur Zeitsynchronisation zugeordnet. Mittels der Zeitsynchronisation wird sichergestellt, dass alle Teilnehmer an der TSN-Verbindung stets demselben und/oder gleichen Kommunikationszyklus folgen und zum jeweiligen Zeitpunkt die richtige Aktion ausführen. Beispielsweise kann die Zeitsynchronisation mittels einer Funk- und/oder GPS-Uhr erfolgen. Als Traffic-Scheduling wird insbesondere auch Traffic-Scheduling und Shaping verstanden. Insbesondere ist Traffic-Scheduling und Shaping ausgebildet, die Koexistenz unterschiedlicher Verkehrsklassen mit unterschiedlichen Anforderungen an die Bandbreite und/oder Zeittreue innerhalb eines Netzwerkes zu realisieren. Beispielsweise kann Traffic-Scheduling und Shaping bedeuten, dass unterschiedliche Prioritäten bei der Übertragung angewendet werden, beispielsweise mehr als fünf Prioritäten und im Speziellen weniger als zehn Prioritäten. Die Anwendung von Fehlertoleranzen bedeutet beispielsweise, dass bei der Übertragung von Daten bei der Auswahl von Kommunikationspfaden und/oder Reservierungen Bedingungen an Zeitgarantien bei der Übertragung unterschiedlich gewertet werden.

Besonders bevorzugt ist es, dass das Netzwerkmodul ausgebildet ist, den Standard IEEE 802.1 bei der Netzwerkverbindung, dem Time-Sensitive-Networking und/oder dem Software-Defined-Networking anzuwenden. Der Standard IEEE 802.1 ist insbesondere der Standard der Time-Sensitive-Networking-Task-Group. Insbesondere bildet der angewendete Standard eine Erweiterung des Bridging-Standards IEEE 802.1 Q.

Eine Ausgestaltung der Erfindung sieht vor, dass die Prozesseinrichtung eine echtzeitfähige Prozesseinrichtung bildet. Echtzeitfähig bedeutet insbesondere, dass die Prozesseinrichtung eine Latenzzeit von höchstens 2 Millisekunden, vorzugsweise weniger als 100 Mikrosekunden und im Speziellen weniger als 50 Mikrosekunden aufweist. Beispielsweise kann die Prozesseinrichtung so ausgebildet sein, schnell auf etwas reagieren zu können, insbesondere interaktionsfähig sein und/oder Positionierungen durchführen zu können. Optional ist es vorgesehen, dass die Prozesseinrichtung ein Achssystem, einen Roboter und/oder einen Sensor bildet. Insbesondere kann die Prozesseinrichtung unterschiedliche Typen umfassen, beispielsweise ein Achssystem und einen Roboter umfassen oder beispielsweise ein Achssystem mit integrierten Sensoren bilden. Die Prozesseinrichtung ist dabei vorzugsweise ausgebildet, einen Fertigungsschritt, insbesondere Bearbeitungsschritt, an einem Gegenstand durchführen zu können. Insbesondere kann die Prozesseinrichtung als eine Transporteinrichtung ausgebildet sein.

Hilfreich für das Verständnis der Erfindung ist ein Netzwerkswitch. Insbesondere ist der Netzwerkswitch als ein Time-Sensitive-Netzwerkswitch ausgebildet. Mittels des Netzwerkswitches kann insbesondere ein time-sensitives Netzwerk betrieben, initialisiert und/oder eingestellt werden. Insbesondere kann das time-sensitive Netzwerk auch eine Mehrzahl an dergleichen Netzwerkswitches aufweisen.

Der Netzwerkswitch ist mit einer Mehrzahl an Netzwerkkomponenten verbindbar. Insbesondere ist der Netzwerkswitch mittels Kabelverbindungen mit den Netzwerkkomponenten verbindbar. Die Netzwerkkomponenten umfassen beispielsweise mindestens eine, vorzugsweise eine Mehrzahl an Prozesseinrichtungen, insbesondere wie vorher beschrieben. Insbesondere können die Netzwerkkomponenten auch einen weiteren dergleichen Netzwerkswitch umfassen. Durch die Verbindung des Netzwerkswitches mit der Prozesseinrichtung wird das time-sensitive Netzwerk insbesondere als physikalische Topologie festgelegt. Insbesondere können auch Prozesseinrichtungen mit weiteren Prozesseinrichtungen verbunden werden. Somit wird das time-sensitive Netzwerk physikalisch aufgebaut und weist eine physikalische reale Topologie auf.

Der Netzwerkswitch weist ein Speichermodul auf, wobei auf dem Speichermodul Switch-Administrationshell-Daten abgelegt sind. Insbesondere sind die Switch-Administrationshell-Daten auf dem Speichermodul gespeichert, insbesondere unveränderbar und/oder veränderbar oder teilweise veränderbar.

Switch-Administrationshell-Daten sind insbesondere die Daten, die zum Betreiben des time-sensitiven Netzwerkes benötigt werden und/oder das time-sensitive Netzwerk charakterisieren und/oder beschreiben. Insbesondere können Switch-Administrationshell-Daten auch Programme und/oder Programmteile umfassen, die zum Betreiben, Einstellen und/oder Verändern des time-sensitiven Netzwerkes benötigt werden. Die Switch-Administrationshell-Daten können insbesondere auch eine Beschreibung der Funktionen des Netzwerkswitches aufweisen und/oder die Funktionen des Netzwerkswitches als Programm hinterlegt haben. Insbesondere kann auch ein zentraler Netzwerkkontroller Switch-Administrationshell-Daten aufweisen.

Die Switch-Administrationshell-Daten umfassen insbesondere Konfigurationsdaten. Die Konfigurationsdaten sind zur Konfigurierung mindestens einer virtuellen Topologie basierend auf dem time-sensitiven Netzwerk ausgebildet. Insbesondere sind die Konfigurationsdaten zur Erstellung, Veränderung und/oder zum Betreiben der virtuellen Topologie ausgebildet, insbesondere als ein Realtime- und/oder Echtzeitnetzwerk und/oder als softwaredefiniertes Netzwerk. Beispielsweise sind die Konfigurationsdaten und/oder umfassen die Konfigurationsdaten ein Programm und/oder einen Programmcode, der ausgebildet ist, bei der Durchführung die virtuelle Topologie einzustellen, zu betreiben, zu verändern und/oder aufrecht zu erhalten.

Dieser Ausgestaltung liegt die Überlegung zugrunde, einen Netzwerkswitch bereitzustellen, mittels welchem ein Netzwerk aus Prozesseinrichtungen in Form einer virtuellen Topologie und/oder eines Software-Defined-Netzwerkes als eine Echtzeit- und/oder Realtime-Anlage betrieben werden kann. Beispielsweise kann der Netzwerkswitch ausgebildet sein, so die Fertigungsanlage in Form einer virtuellen Topologie und/oder eines Software-Defined-Networks zu betreiben, dass die jeweilige Fertigung ermöglicht wird.

Besonders bevorzugt ist es, dass die Konfigurationsdaten einen Topologie-Typparameter und/oder einen virtuellen Topologie-Teilnehmerparameter umfassen. Der Topologie-Typparameter beschreibt beispielsweise die Art und/oder den Typ der virtuellen Topologie, beispielsweise, ob es sich um eine Stern-, Ring- oder Linien-Topologie handelt. Der virtuelle Topologie-Teilnehmerparameter beschreibt beispielsweise, welche Netzwerkkomponenten, beispielsweise welche Prozesseinrichtungen und/oder Netzwerkswitches an der virtuellen Topologie teilnehmen. Beispielsweise werden die Topologie-Typparameter und/oder virtuellen Topologie-Teilnehmerparameter benötigt, um das gewünschte Netzwerk und/oder die gewünschte virtuelle Topologie erstellen zu können.

Eine Ausgestaltung der Erfindung sieht vor, dass der Netzwerkswitch ein Prozessmodul umfasst. Beispielsweise ist das Prozessmodul als eine Software und/oder als ein Softwaremodul ausgebildet und/oder zur Durchführung eines Programms und/oder Programmcodes. Beispielsweise kann das Prozessmodul ausgebildet sein, die Konfigurationsdaten und/oder die Software, die von den Konfigurationsdaten umfasst ist, auszuführen. Insbesondere ist das Prozessmodul ausgebildet, zur Generierung, Festlegung und/oder Betreibung der virtuellen Topologie die Virtual-Topology-Daten von den Prozesseinrichtungen des time-sensitiven Netzwerks abzurufen, im Speziellen die Virtual-Topology-Daten von den teilnehmenden Prozesseinrichtungen, beispielsweise basierend auf den Topologie-Teilnehmerparametern. Insbesondere kann die Prozesseinrichtung ausgebildet sein, die Virtual-Topology-Daten einer oder mehrerer Prozesseinrichtungen des time-sensitiven Netzwerks zu verändern, beispielsweise den Topologie-ID-Parameter, den Indexparameter der Position und/oder einen Nachfolgeparameter einer Prozesseinrichtung zu verändern. Die Konfiguration und/oder das Betreiben der virtuellen Topologie und/oder des time-sensitiven Netzwerks basiert insbesondere auf den abgerufenen Virtual-Topology-Daten.

Im Speziellen ist das Prozessmodul ausgebildet, zur Konfiguration der virtuellen Topologie und/oder des time-sensitiven Netzwerks folgende Schritte durchzuführen:
- Abrufen der Virtual-Topology-Daten der teilnehmenden Prozesseinrichtungen, beispielsweise mittels der Prozesseinrichtungstopologie."
- Feststellung der aktuellen und/oder vorliegenden physikalischen Netzwerkstruktur und/oder Verifizieren der vorliegenden Zeitpläne und/oder Zeitslots und/oder der verfügbaren Bandbreite und/oder der reservierten Zeitslots."
- Bestimmen und/oder Berechnen eines möglichen Pfads entlang der teilnehmenden Prozesseinrichtungen basierend auf der gewünschten virtuellen Topologie.
- Bestimmen von möglichen und/oder freien belegbaren Zeitslots für die einzustellende Verbindung entlang des bestimmten Pfades. Beispielsweise kann, wenn kein möglicher Pfad gefunden wird, ausgegeben werden, dass diese Topologie momentan nicht möglich ist.
- Konfigurieren und/oder Einstellen beziehungsweise verändern der jeweiligen Netzwerkswitches und/oder Prozesseinrichtungen, beispielsweise updaten der virtuellen Topologie-Parameter und/oder der Konfigurationsdaten.

Optional kann ausgegeben werden, dass die gewünschte virtuelle Topologie erstellt wurde.

Im Speziellen kann es vorgesehen sein, dass die Switch-Administrationshell-Daten Konfigurationsänderungsdaten umfassen. Beispielsweise können die Konfigurationsänderungsdaten als eine Software und/oder ein Softwaremodul beziehungsweise Programmcode hinterlegt sein. Mittels der Konfigurationsänderungsdaten kann beispielsweise eine bestehende virtuelle Topologie in eine andere geändert werden und/oder Prozesseinrichtungen aus der virtuellen Topologie entnommen oder hinzugefügt werden.

Einen weiteren Gegenstand der Erfindung bildet ein Netzwerk mit mindestens einem Netzwerkswitch, insbesondere wie vorher beschrieben und mit mindestens einer, vorzugsweise einer Mehrzahl an Prozesseinrichtungen, wie vorher beschrieben. Insbesondere bildet das Netzwerk die Fertigungsanlage. Die virtuelle Topologie, welche in dem Netzwerk einstellbar und/oder betreibbar ist, kann zur Durchführung der Teilschritte und/oder der Fertigungsschritte in der Fertigungsanlage vorgesehen sein. Im Speziellen sind die Prozesseinrichtungen untereinander und/oder mit dem Netzwerkswitch datentechnisch, vorzugsweise physikalisch Kabelverbindung, verbunden und/oder verbindbar.

Einen weiteren Gegenstand der Erfindung bildet ein Verfahren zum Betreiben und/oder Einstellen einer virtuellen Topologie und/oder eines Netzwerkes. Das Netzwerk ist insbesondere ausgebildet wie vorher beschrieben und/oder umfasst einen Netzwerkswitch wie vorher beschrieben und eine Mehrzahl an Prozesseinrichtungen. Das Verfahren sieht vor, dass die Prozesseinrichtungen Virtual-Topology-Daten umfassen, wobei zur Etablierung und/oder Generierung der virtuellen Topologie die Virtual-Topology-Daten der teilnehmenden Prozesseinrichtungen abgerufen und/oder verändert werden. Beispielsweise sieht das Verfahren auch vor, dass der Aktivitätsparameter in den Virtual-Topology-Daten der Prozesseinrichtungen verändert wird, beispielsweise wenn die Prozesseinrichtung aktiviert und/oder deaktiviert zur Teilnahme in der virtuellen Topologie wird.

Einen weiteren Gegenstand der Erfindung bildet ein Computerprogramm, wobei das Computerprogramm ausgebildet ist, die Schritte des Verfahrens durchzuführen, wenn das Computerprogramm auf einem Rechner, einem Prozessor, dem Netzwerkswitch und/oder einer Prozesseinrichtung wie vorher beschrieben durchgeführt wird.

Einen weiteren Gegenstand der Erfindung bildet ein Speichermedium, insbesondere ein maschinenlesbares Speichermedium, wobei das Speichermedium das Computerprogramm wie vorher beschrieben umfasst.

Weitere Vorteile, Wirkungen und Ausgestaltungen der Erfindung ergeben sich aus den beigefügten Figuren und deren Beschreibung. Dabei zeigen:
Figuren 1a, 1b und 1c Ausführungsbeispiele von Fertigungsanlagen;
Figur 2 Datenstruktur von Verwaltungsschalendaten als ein Ausführungsbeispiel;
Figur 3 physikalische Topologie und virtuelle Topologie einer Fertigungsanlage.

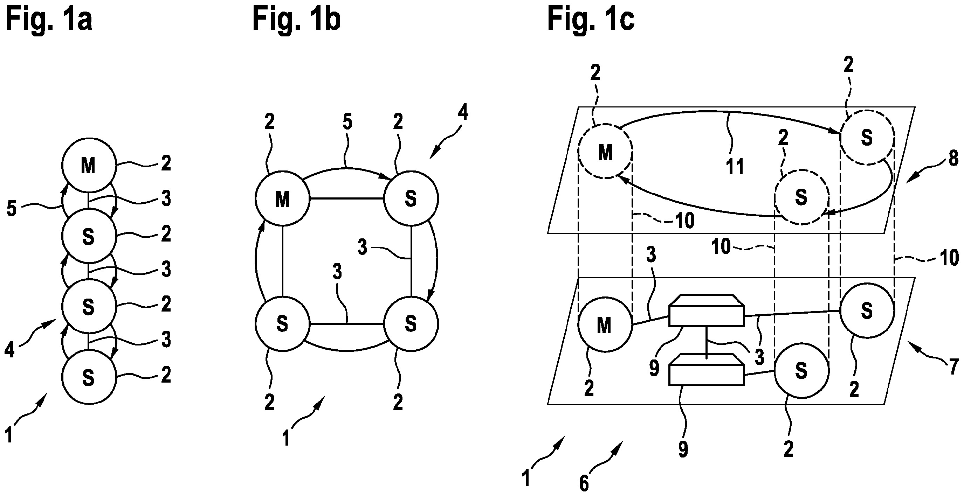

Figur 1a zeigt eine Fertigungsanlage 1. Die Fertigungsanlage 1 umfasst drei Prozesseinrichtungen 2. Die Fertigungsanlage 1 ist beispielsweise Teil einer Fertigung und/oder Produktion, beispielsweise in einer Fabrikhalle. Mittels der Fertigungsanlage kann beispielsweise ein Bauteil gefertigt und/oder bearbeitet werden.

Die Produktionseinrichtungen 2 sind zur Durchführung von Teilschritten ausgebildet. Die Produktionseinrichtungen 2 sind beispielsweise als Roboter, stationär oder mobil ausgebildet. Insbesondere können die Produktionseinrichtungen auch Förderbänder, Bearbeitungsstationen wie Bohr- oder Sägestationen oder Schweißanlagen darstellen. Die Produktionseinrichtungen 2 sind räumlich beabstandet angeordnet und mittels Verbindungen 3, beispielsweise Kabelverbindungen und/oder Funkverbindungen, miteinander zum Datenaustausch verbunden.

Die Produktionseinrichtungen 2 bilden hier ein Netzwerk in Form einer Linie. Dabei sind die Prozesseinrichtungen 2 jeweils mit einem oder mit zwei Prozesseinrichtungen verbunden, wobei die Verbindungen so angeordnet sind, dass keine Verzweigungen auftreten. Die Verbindung der Prozesseinrichtungen 2 mit den Verbindungen 3 bilden ein physikalisches Netz 4. Innerhalb des physikalischen Netzes 4 können Daten ausgetauscht werden. Der Datenaustausch kann als Datenübernahme oder Datenübergabe ausgebildet werden. Der Datenaustausch ist in Form von Pfeilen 5 dargestellt.

Die Prozesseinrichtungen 2 sind als Realtime-Prozesseinrichtungen ausgebildet. Eine Prozesseinrichtung 2 bildet dabei einen Master M, wobei die anderen Prozesseinrichtungen 2 Slaves S bilden. Das Mastermodul M dominiert und/oder bestimmt insbesondere die Netzwerkkommunikation.

Figur 1b zeigt eine weitere Fertigungsanlage 1, wobei die Fertigungsanlage 1 wieder vier Produktionseinrichtungen 2 umfasst. Die Produktionseinrichtungen 2 sind dabei jeweils mit zwei benachbarten Produktionseinrichtungen 2 verbunden. Das Netzwerk bildet damit ein Ringnetz. Auch hier bildet eine Produktionseinrichtung 2 einen Master M, wobei die anderen Produktionseinrichtungen 2 als Slaves S fungieren.

Sowohl in Figur 1a, als auch 1b ist das Netz 4 in seiner physikalischen Topologie gezeigt, wobei die physikalische Topologie insbesondere anhand der Pfeile 5 beschreibbar ist.

Figur 1c zeigt schematisch ein Ausführungsbeispiel einer Fertigungsanlage und/oder eines Netzwerkes 6, sowohl in seiner physikalischen Topologie 7, als auch in der virtuellen Topologie 8.

Die physikalische Topologie 7 beschreibt die reale Anordnung der Prozesseinrichtungen 2, der Netzwerkswitches 9 und deren Verbindungen 3. Hier umfasst das Netzwerk 6 und die physikalische Topologie 7 drei Prozesseinrichtungen 2 sowie zwei Netzwerkswitches 9. Ein Netzwerkswitch 9 ist mit zwei Prozesseinrichtungen 2 verbunden, wobei eines dieser Prozesseinrichtungen 2 einen Master M und das andere einen Slave S bildet. Ferner ist das Netzwerkswitch 9 mit dem weiteren Netzwerkswitch mit einer Verbindung, beispielsweise einem Kabel verbunden. Mittels dieser kann ein Datenaustausch stattfinden. Der weitere Netzwerkswitch 9 ist zusätzlich mit einer Prozesseinrichtung 2 verbunden, wobei diese Prozesseinrichtung 2 einen Slave bildet. Mittels der Verbindungen 3 und der Netzwerkswitches 9 kann ein Datenaustausch untereinander stattfinden, insbesondere zwischen den Prozesseinrichtungen 2 und/oder zwischen den Switches 9 beziehungsweise den Switches 9 und den Prozesseinrichtungen 2. Insbesondere können die Netzwerkswitches 9 ausgebildet sein, Daten von den Prozesseinrichtungen 2 abzurufen und/oder Daten, welche dort hinterlegt und/oder gespeichert sind, teilweise zu verändern.

Die Netzwerkswitches 9 sind ausgebildet, eine virtuelle Topologie, insbesondere eine softwaredefinierte virtuelle Topologie zu generieren, wobei diese als ein Realtime- und/oder als ein Time-Sensitive-Netzwerk ausgebildet ist.

Während die physikalische Topologie 7 als ein verzweigtes Netzwerk und/oder eine verzweigte Topologie ausgebildet ist, insbesondere sternförmig, wobei die Prozesseinrichtungen 2 beispielsweise jeweils Zweige und/oder Strahlen des Sternes bilden, ist die virtuelle Topologie 8 als eine Ringtopologie ausgebildet. Die sich entsprechenden Prozesseinrichtungen 2 von physikalischer Topologie und virtueller Topologie 8 sind aufeinander mit Hilfe von Hilfsprojektionslinien 10 dargestellt. Die Datenverbindungen 11 sind mittels der Switches 9 und als eine Softwarelösung gebildet. Diese Verbindungen 11 existieren nicht als reale kabelgebundene physikalische Verbindungen, sondern sind als softwarerealisierte Verbindungen ausgebildet. Diese Verbindungen 11 sind insbesondere als time-sensitive Netzwerkverbindungen ausgebildet.

Die Fertigungsanlage 2 in seiner physikalischen Topologie 7 kann mittels der verwendeten und vorgeschlagenen Prozesseinrichtungen 2 sowie der Netzwerkswitches 9 in eine abstrakte virtuelle Topologie 8 gemünzt werden, sodass unabhängig von der Verkabelung 3 beliebige virtuelle Topologien 8 erhältlich sind.

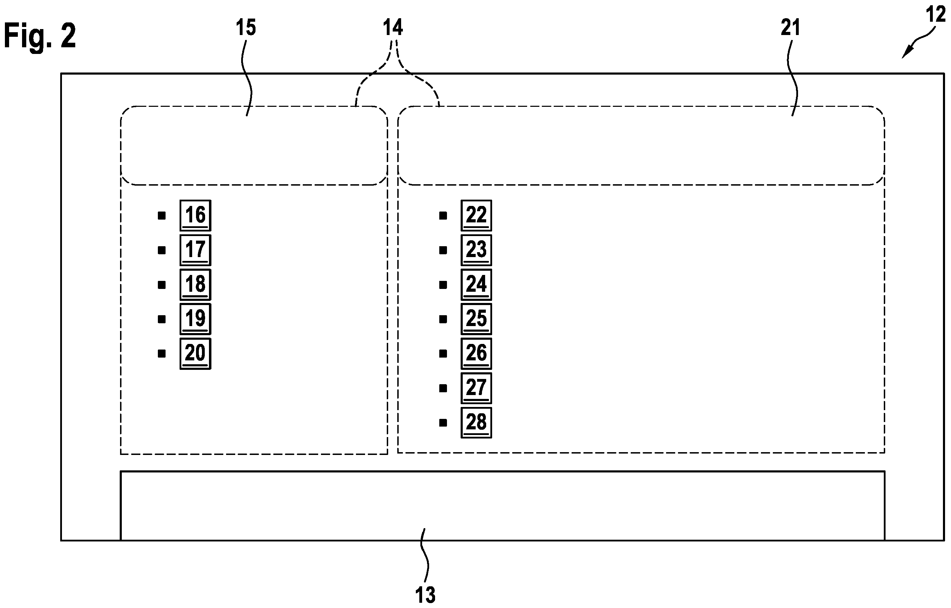

Figur 2 zeigt beispielhaft die Struktur von Verwaltungsschalendaten in der Verwaltungsschale 12 einer Prozesseinrichtung 2. Die Prozesseinrichtung 2 umfasst dabei den physikalischen Asset 13, welcher beispielsweise als Anlagenbauteil ausgebildet ist, und zusätzlich die Verwaltungsschale 12. In der Verwaltungsschale 12, welche beispielsweise auch als eine Speichereinheit und/oder Speichermodul ausgebildet sein kann, sind die Verwaltungsschalendaten 14 abgelegt. Die Verwaltungsschalendaten 14 umfassen TSN-Profildaten 15. Die TSN-Profildaten 15 beschreiben beispielsweise Eigenschaften der Prozesseinrichtung 2, beispielsweise deren Mac-Adresse 16, deren IP-Adresse 17, deren Ports 18, deren Cycle-Time 19 und deren vlan-Priorität 20.

Um die virtuelle Topologie der Fertigungsanlage 1 zu ermöglichen, umfassen die Verwaltungsschalendaten 14 virtuelle Topologie-Daten 21. Die Virtual-Topology-Daten 21 sind beispielsweise zur Etablierung der virtuellen Topologie 8 und/oder zum Betreiben derer nötig. Die Virtual-Topology-Daten umfassen beispielsweise einen Aktivitätsparameter 22, einen ID-Parameter 23, einen Typparameter der Topologie 24, einen Topologie-ID-Parameter 25, einen Indexparameter 26, einen Nachfolgerparameter 27 und einen Nachfolge-Interface-Parameter 28. Die Virtual-Topology-Daten 21 und/oder deren Parameter können insbesondere statisch, veränderbar und/oder teilweise statisch und/oder teilweise veränderbar ausgebildet sein. Eine Veränderung kann beispielsweise durch die Netzwerkswitches 9 erfolgen, beispielsweise bei der Konfiguration der gewünschten virtuellen Topologie 8.

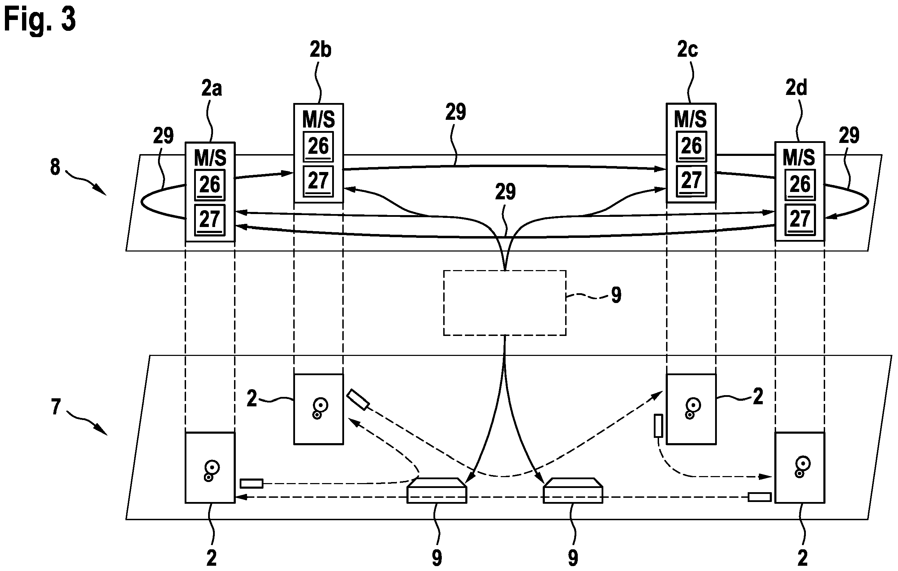

Figur 3 zeigt beispielhaft die Fertigungsanlage 1 in ihrer physikalischen Topologie 7 und in ihrer virtuellen Topologie 8. Die Fertigungsanlage 1 umfasst in ihrer physikalischen Topologie zwei Netzwerkswitches 9, wobei die Netzwerkswitches 9 als SDN-Controller ausgebildet sind und zur Konfiguration, zum Betreiben und/oder Verändern der virtuellen Topologie ausgebildet sind. Insbesondere können die SDN-Controller auch als eigenständige zentrale Komponenten ausgebildet sein. Die Netzwerkswitches 9 sind datentechnisch, beispielsweise mittels Kabelleitungen oder mittels Funkverbindungen, mit Prozesseinrichtungen 2 verbunden. Die Prozesseinrichtungen 2 sind ausgebildet zur Durchführung eines Fertigungsteilschrittes. Die Prozesseinrichtungen 2 weisen wie in Figur 2 dargestellt, das Asset 13 und die Administration-Shell 14 auf. Mittels der Switches 9 kann eine Datenverbindung untereinander, insbesondere unter den Prozesseinrichtungen 2, ermöglicht werden, wobei die Netzwerkswitches 9 auch ausgebildet sein können, die Daten und/oder Parameter in den Administration-Shell-Daten 14 zu verändern. Mittels der Virtual-Topology-Daten 21 kann die virtuelle Topologie 8 festgelegt und/oder betrieben werden. Die virtuelle Topologie 8 ist hier als ein Ringnetzwerk ausgebildet, wobei die virtuellen Netzwerkverbindungen 29 mittels der realen Verbindungen 3 softwaretechnisch erzeugt werden. Die Prozesseinrichtungen 2 sind zur besseren Beschreibung in der virtuellen Topologie als Prozesseinrichtungen 2a, 2b, 2c und 2d bezeichnet. Die Prozesseinrichtung 2b bildet hier einen Master M. Nachdem die Prozesseinrichtung 2b einen Master M bildet, wird dieser der Indexparameter 26 mit dem Wert null zugeordnet. Ferner wird der Prozesseinrichtung 2b als Nachfolgeparameter 27 der Wert eins zugeordnet. Die Prozesseinrichtung 2c bildet einen Slave S und weist als Indexparameter 26 den Wert eins auf und als Nachfolgeparameter 27 den Wert zwei. Nachdem Prozesseinrichtung 2b als Nachfolgeparameter 27 den Wert eins aufweist, ist in der virtuellen Topologie festgelegt, dass diese Verbindung 29 zu der Prozesseinrichtung 2c erfolgen muss, da diese den Indexparameter 26 gleich eins aufweist.

Die Prozesseinrichtung 2d ist ebenfalls als ein Slave S ausgebildet und weist als Indexparameter 26 den Wert 2 und als Nachfolgeparameter 27 den Wert drei auf, sodass eine Verbindung in der virtuellen Topologie zwischen den Prozesseinrichtungen 2c und 2d vorliegen muss.

Die Prozesseinrichtung 2a ist ebenfalls als ein Slave ausgebildet und weist als Indexparameter 26 den Wert drei und als Nachfolgeparameter 27 den Wert null auf. Somit muss in der virtuellen Topologie 8 eine Verbindung zwischen der Prozesseinrichtung 2a und 2b vorliegen, da die Prozesseinrichtung 2b den Indexparameter null aufweist. Mittels dieser Parameter ist somit eine time-sensitive Netzwerkverbindung in Form einer virtuellen Topologie in einer Fertigungsanlage realisierbar.

## Patentansprüche

1. Prozesseinrichtung (2) zur Durchführung eines Teilschritts in einer Fertigungsanlage (1),
mit einem Netzwerkmodul zum Aufbau einer Time-Sensitive-Networking-Verbindung
mit einem Speichermodul, wobei das Speichermodul Verwaltungsschalendaten (14) umfasst,
wobei die Verwaltungsschalendaten (14) Virtual-Topology-Daten (21) für ein Software-Defined-Networking umfassen, wobei die Virtual-Topology-Daten (21) zum Aufbau, Betreiben, Definieren und/oder Ändern des Software-Defined-Networkings ausgebildet sind, wobei das Software-Defined-Networking ausgebildet ist, eine virtuelle Topologie (8) eines Netzwerks zu definieren und/oder aufzubauen, wobei die virtuelle Topologie (8) nicht zwangsläufig dem Aufbau und/oder der Topologie des Netzwerks entsprechen muss,
**dadurch gekennzeichnet, dass**
die Virtual-Topology-Daten einen Aktivitätsparameter (22) zur Beschreibung des Prozessstatusses der Prozesseinrichtung (2) umfassen.

2. Prozesseinrichtung (2) nach Anspruch 1, **dadurch gekennzeichnet, dass** die Virtual-Topology-Daten (21) einen Aktivitätsparameter (22), einen ID-Parameter (23), einen Typparameter (24) der virtuellen Topologie, eine Topologie-ID-Parameter (25), einen Indexparameter (26) der Position in der virtuellen Topologie, einen Nachfolgerparameter (27) und/oder einen Nachfolger-Interface-Parameter (28) umfassen.

3. Prozesseinrichtung (2) nach Anspruch 1 oder 2, **dadurch gekennzeichnet, dass** die Virtual-Topology-Daten (21) anpassbare und/oder veränderbare Daten bilden und/oder umfassen.

4. Prozesseinrichtung (2) nach einem der vorherigen Ansprüche, **dadurch gekennzeichnet, dass** das Netzwerkmodul zur Kopplung mit einer weiteren dergleichen Prozesseinrichtung (2) ausgebildet ist, wobei die Kopplung als Time-Sensitive-Networking-Verbindung ausgebildet ist, wobei das Netzwerkmodul ausgebildet ist, eine Zeitsynchronisation durchzuführen, ein Traffic-Scheduling anzuwenden und/oder eine Fehlertoleranz anzuwenden.

5. Prozesseinrichtung (2) nach einem der vorherigen Ansprüche, **dadurch gekennzeichnet, dass** das Netzwerkmodul ausgebildet ist den Standard IEEE 802.1 bei der Netzwerkverbindung anzuwenden.

6. Prozesseinrichtung (2) nach einem der vorherigen Ansprüche, **dadurch gekennzeichnet, dass** die Prozesseinrichtung (2) ein Achssystem, einen Roboter oder Sensor bildet.

7. Netzwerk (6) mit mindestens einem Netzwerkswitch (9) zum Betreiben eines Time-Sensitive-Netzwerks, und mit mindestens einer Prozesseinrichtung (2) nach einem der Ansprüche 1 - 6,
wobei der Netzwerkswitch (9) mit einer Mehrzahl an Netzwerkkomponenten verbindbar ist, wobei die Netzwerkkomponenten mindestens eine Prozesseinrichtung (2) nach einem der vorherigen Ansprüche 1 bis 6 umfassen,
wobei der Netzwerkswitch (9) ein Speichermodul mit Switch-Administrationshell-daten aufweist, wobei die Switch-Administrationshell-daten Konfigurationsdaten zur Konfigurierung mindestens einer virtuellen Topologie (8) basierend auf dem Time-Sensitiven-Netzwerk aufweist.

8. Verfahren zum Betreiben und/oder Einstellen einer virtuellen Topologie (8), mit mindestens einer Prozesseinrichtung (2) nach einem der Ansprüche 1 bis 6, wobei zur Etablierung und/oder Generierung der virtuellen Topologie (8) die Virtual-Topology-Daten (21) der teilnehmenden Prozesseinrichtungen (2) abgerufen und/oder verändert werden.

9. Computerprogramm, wobei das Computerprogramm ausgebildet ist, die Schritte des Verfahrens nach Anspruch 8 durchzuführen, wenn das Computerprogramm auf einem Rechner, einem Prozessor, einem Netzwerkswitch (9) und/oder einer Prozesseinrichtung (2) durchgeführt wird.

10. Maschinenlesbares Speichermedium, wobei das Speichermedium das Computerprogramm nach Anspruch 9 umfasst.

## Claims

1. Process device (2) for carrying out a partial step in a production plant (1),
having a network module for establishing a time-sensitive networking connection,
having a memory module, wherein the memory module comprises management shell data (14),
wherein the management shell data (14) comprise virtual topology data (21) for software-defined networking, wherein the virtual topology data (21) are configured to establish, operate, define and/or modify the software-defined networking, wherein the software-defined networking is configured to define and/or establish a virtual topology (8) of a network, wherein the virtual topology (8) does not necessarily have to correspond to the structure and/or topology of the network,
**characterized in that** the virtual topology data comprise an activity parameter (22) for describing the process status of the process device (2).

2. Process device (2) according to Claim 1, **characterized in that** the virtual topology data (21) comprise an activity parameter (22), an ID parameter (23), a type parameter (24) of the virtual topology, a topology ID parameter (25), an index parameter (26) of the position in the virtual topology, a successor parameter (27) and/or a successor interface parameter (28) .

3. Process device (2) according to Claim 1 or 2, **characterized in that** the virtual topology data (21) form and/or comprise adaptable and/or modifiable data.

4. Process device (2) according to one of the preceding claims, **characterized in that** the network module is configured to be coupled to a further such process device (2), wherein the coupling is configured as a time-sensitive networking connection, wherein the network module is configured to carry out time synchronization, to apply traffic scheduling and/or to apply fault tolerance.

5. Process device (2) according to one of the preceding claims, **characterized in that** the network module is configured to apply the IEEE 802.1 standard for the network connection.

6. Process device (2) according to one of the preceding claims, **characterized in that** the process device (2) forms an axle system, a robot or a sensor.

7. Network (6) having at least one network switch (9) for operating a time-sensitive network, and having at least one process device (2) according to one of Claims 1 - 6,
wherein the network switch (9) is able to be connected to a plurality of network components, wherein the network components comprise at least one process device (2) according to one of preceding Claims 1 to 6,
wherein the network switch (9) has a memory module containing switch administration shell data, wherein the switch administration shell data contain configuration data for configuring at least one virtual topology (8) based on the time-sensitive network.

8. Method for operating and/or setting a virtual topology (8), having at least one process device (2) according to one of Claims 1 to 6, wherein, in order to establish and/or generate the virtual topology (8), the virtual topology data (21) of the participating process devices (2) are retrieved and/or modified.

9. Computer program, wherein the computer program is configured to carry out the steps of the method according to Claim 8 when the computer program is implemented on a computer, a processor, a network switch (9) and/or a process device (2).

10. Machine-readable storage medium, wherein the storage medium comprises the computer program according to Claim 9.

## Revendications

1. Dispositif de processus (2) destiné à exécuter une étape partielle dans une installation de fabrication (1), comprenant un module réseau destiné à établir une connexion de réseautage chronosensible
comprenant un module de mémoire, le module de mémoire comportant des données de coquille de gestion (14),
les données de coquille de gestion (14) comprenant des données de topologie virtuelle (21) pour un réseautage défini par logiciel, les données de topologie virtuelle (21) étant configurées pour construire, exploiter, définir et/ou modifier le réseautage défini par logiciel, le réseautage défini par logiciel étant configuré pour définir et/ou construire une topologie virtuelle (8) d'un réseau, la topologie virtuelle (8) ne devant pas forcément correspondre à la structure et/ou à la topologie du réseau,
**caractérisé en ce que** les données de topologie virtuelle comprennent un paramètre d'activité (22) destiné à décrire l'état de processus du dispositif de processus (2) .

2. Dispositif de processus (2) selon la revendication 1, **caractérisé en ce que** les données de topologie virtuelle (21) comprennent un paramètre d'activité (22), un paramètre d'identification (23), un paramètre de type (24) de la topologie virtuelle, un paramètre d'identification de topologie (25), un paramètre d'indice (26) de la position dans la topologie virtuelle, un paramètre de successeur (27) et/ou un paramètre d'interface de successeur (28).

3. Dispositif de processus (2) selon la revendication 1 ou 2, **caractérisé en ce que** les données de topologie virtuelle (21) forment et/ou comprennent des données adaptables et/ou modifiables.

4. Dispositif de processus (2) selon l'une des revendications précédentes, **caractérisé en ce que** le module de réseau est configuré pour être couplé à un dispositif de processus (2) supplémentaire similaire, le couplage étant réalisé sous la forme d'une connexion de réseautage chronosensible, le module de réseau étant configuré pour effectuer une synchronisation temporelle, appliquer un ordonnancement de trafic et/ou appliquer une tolérance aux pannes.

5. Dispositif de processus (2) selon l'une des revendications précédentes, **caractérisé en ce que** le module de réseau est configuré pour appliquer la norme IEEE 802.1 lors de la connexion au réseau.

6. Dispositif de processus (2) selon l'une des revendications précédentes, **caractérisé en ce que** le dispositif de processus (2) forme un système d'axes, un robot ou un capteur.

7. Réseau (6) comprenant au moins un commutateur de réseau (9) destiné à exploiter un réseau chronosensible, et comprenant au moins un dispositif de processus (2) selon l'une des revendications 1 à 6,
le commutateur de réseau (9) pouvant être connecté à une pluralité de composants de réseau, les composants de réseau comportant au moins un dispositif de processus (2) selon l'une des revendications précédentes 1 à 6,
le commutateur de réseau (9) possédant un module de mémoire avec des données de coquille de gestion de commutateur, les données de coquille de gestion de commutateur présentant des données de configuration destinées à configurer au moins une topologie virtuelle (8) sur la base du réseau chronosensible.

8. Procédé d'exploitation et/ou de réglage d'une topologie virtuelle (8), comprenant au moins un dispositif de processus (2) selon l'une des revendications 1 à 6,
les données de topologie virtuelle (21) des dispositifs de processus (2) participants étant invoquées et/ou modifiées en vue de l'établissement et/ou la génération de la topologie virtuelle (8).

9. Programme informatique, le programme informatique étant configuré pour exécuter les étapes du procédé selon la revendication 8 lorsque le programme informatique est exécuté sur un ordinateur, un processeur, un commutateur de réseau (9) et/ou un dispositif de processus (2).

10. Support de stockage lisible par machine, le support de stockage comprenant le programme informatique selon la revendication 9.
